# EUROPEAN PATENT SPECIFICATION

(11) **EP 3 251 944 B1**
(45) Date of publication and mention of the grant of the patent: **01.08.2018**
(21) Application number: 17164496.6
(22) Date of filing: 03.04.2017
(51) Int. Cl.: B63B 35/50, B64F 1/00, G01C 21/18, B63B 17/00

(54) **AUTOMATIC LEVELING APPARATUS DEVICE FOR PLATFORMS**
AUTOMATISCHE NIVELLIERUNGSVORRICHTUNG FÜR PLATTFORMEN
DISPOSITIF DE NIVELLEMENT AUTOMATIQUE POUR PLATEFORMES

(30) Priority: 01.06.2016 IT UA20164052
(43) Date of publication of application: 06.12.2017
(73) Proprietor: B. FINANCIAL S.r.l., 24067 Sarnico (BG) (IT)
(72) Inventor: BESENZONI, Giovanni, 24067 SARNICO (BG) (IT)
(74) Representative: Burchielli, Riccardo

(56) References cited:
- US-A- 1 869 247
- US-A- 4 828 376
- US-A1- 2013 134 260

## Description

The present invention relates to an automatic leveling apparatus for platforms.

In particular, the present invention relates to an automatic leveling device for platforms to be installed on a ship and especially on a yacht.

Nowadays in the nautical field, issues related to helicopters and drones landing on ships or yachts of aircraft are known.

In particular, in cases of strong wave motion, there is a corresponding oscillation of the platform for landing which makes the landing particularly risky and complex.

The underlying problem of the present invention is to facilitate the landing of aircraft on ships or on yachts.

An automatic leveling device for platforms having the technical features of the preamble of the appended claim 1 is known, for example, from US4828376A.

The main task of the present invention is to provide an automatic leveling device for platform that solves this problem by solving the drawbacks of the landing platforms described above.

Within the scope of this task, it is an object of the present invention to provide a leveling device that allows rapid and precise leveling of the platform.

Another object of the present invention is to provide a reliable leveling device that effectively supports the weight of the aircraft in rest or landing on the platform.

Yet another object of the invention is to propose a leveling device that allows a leveling movement of the platform that is fluid but fast and prevents settling oscillations or end-course.

This task, as well as these and other objects that will best be seen in the following, are achieved by an automatic leveling device for platform according to claim 1 attached.

Detail features of the leveling device for platform according to the invention are given in the corresponding dependent claims.

Further features and advantages of the invention will become more apparent from the description of a preferred, but not exclusive embodiment of the automatic leveling device for platforms according to the invention, illustrated by way of non-limiting example in the attached drawings, in which:
- figure 1 shows a leveling device according to the present invention, in section;
- figure 2 shows a leveling device according to the present invention in perspective view;
- figure 3 illustrates the device of figure 2 in front view with some parts removed to better illustrate others;
- figure 4 shows an alternative form of the device of figure 2 in perspective view;
- figures 5a and 5b illustrate the front view of the device of figure 4 in two possible operating configurations;
- figure 6 shows a leveling device according to the present invention, in section;
- figure 7 shows a leveling device according to the present invention in perspective view;
- figure 8 illustrates the device of figure 2 in front view with some removed parts to better highlight others.

With particular reference to the figures cited, an automatic leveling device for platforms, generally indicated by 10, has, in accordance with the present invention, a particular peculiarity comprising:
- a movable part 11, fixable to a platform;
- a fixed part 12, fixable to a base suitable for supporting the platform;
- actuating means able to move the movable part 11 with respect to the fixed part 12.

The platform, not shown, is preferably a landing platform for vertical take-off aircraft such as helicopters or drones.

Advantageously, said platform comprises a central element surrounded by lateral elements connected to the central element in such a way that, it can be folded onto the latter.

The movable part 11 advantageously comprises a plate 11a, fixable to the platform to support it.

In accordance with the present invention, the fixed part 12 comprises a concave seat.

The movable part 11 comprises a convex element configured to engage the concave seat in a sliding manner.

The concave seat and the convex element are configured to couple so as to define an axis of rotation with respect to which the movable part 11 is rotatable with respect to the fixed part 12 to actuate the actuating means.

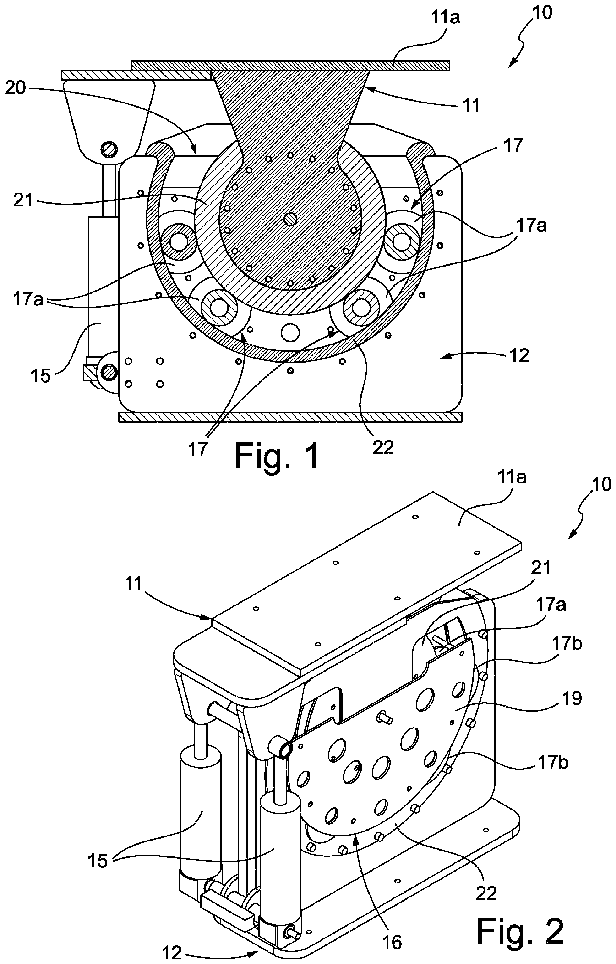

In a first embodiment of the present invention, shown in fig. 1-3, the actuation means preferably include a linear actuator and more preferably a hydraulic piston 15 connected to the movable part 11 and the fixed part 12 to rotate the movable part 11 with respect to the fixed part 12 relative to said axis of rotation when it is actuated.

Advantageously, the leveling device 10 comprises a control device and preferably an electronic bubble device, which is coupled with the platform supported by the leveling device 10, to detect its inclination with respect to the horizontal plane.

The control device is connected to the actuating means to move the movable part 11 with respect to the fixed part 12 so as to keep it in a horizontal position.

Preferably, the control device is configured to implement a feedback on the platform's inclination with respect to the horizontal plane.

Advantageously, the leveling device 10 comprises a centering and guiding device 16 interposed between the concave seat and the convex element to facilitate and guide their mutual rotation.

This centering and guiding device 16 advantageously comprises a support unit to which rollers 17 are pivoted, which engage simultaneously said concave and said convex element, in a way to mutually spaced them apart and rolled on them when the movable part 11 is moved with respect to the fixed part 12.

Preferably, the support unit comprises two faces 18, 19, mutually facing each other, between which the rollers 17 are placed, pivoted to both walls 18, 19.

The concave seat and the convex element each comprise a rail element 20, 21 that is engaged by the rollers 17, which have lateral expansions 17a adapted to face the sides of the rail elements 20, 21 to guide the rollers 17 along the rail elements 20, 21.

Preferably, the concave and convex element have a circular arc profile whose center defines the axis of rotation.

Advantageously, the leveling device 10 comprises two groups, each comprising a moving part 11, a fixed part 12, and a centering and guiding device 16.

In this case, the actuation means may be common for both groups or each group may be equipped with their own actuation means.

Thus a platform can be sustained by these two groups, which will be appropriately spaced to define a stable support for the platform.

The control device will detect any oscillations of the platform and operating the actuation means to keep it in a horizontal configuration.

It is thus clear how the use of a leveling device according to the present invention, used for supporting a landing platform on a ship or yacht, permits to compensate the rolling offset, maintaining the platform in a favorable configuration for a safety landing or taking off of an airplane.

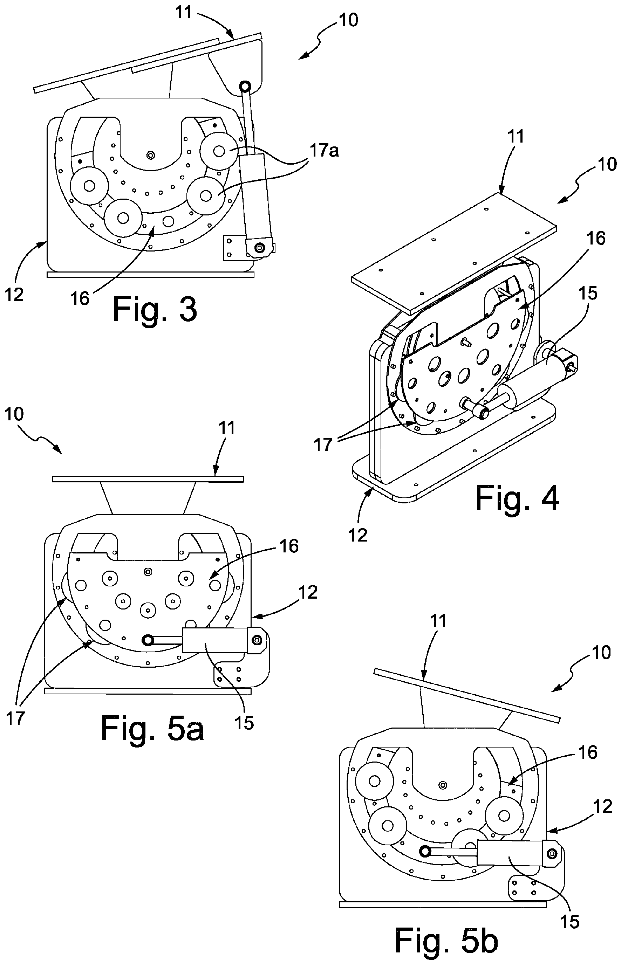

Figures 4, 5a, and 5b show a variation of the leveling device illustrated in Figures 1 to 3, wherein the actuation means, in the preferred embodiment but not exclusive of a hydraulic piston 15 of the figures cited above, are connected to the fixed part 12 and to the centering and guiding device 16, instead of directly to the mobile part 11.

In this case, it is clear that the action of the actuation means on the centering and guiding device 16 determines a rotation of the movable part 11 with respect to the fixed part 12 as exemplified in Figs. 5a and 5b.

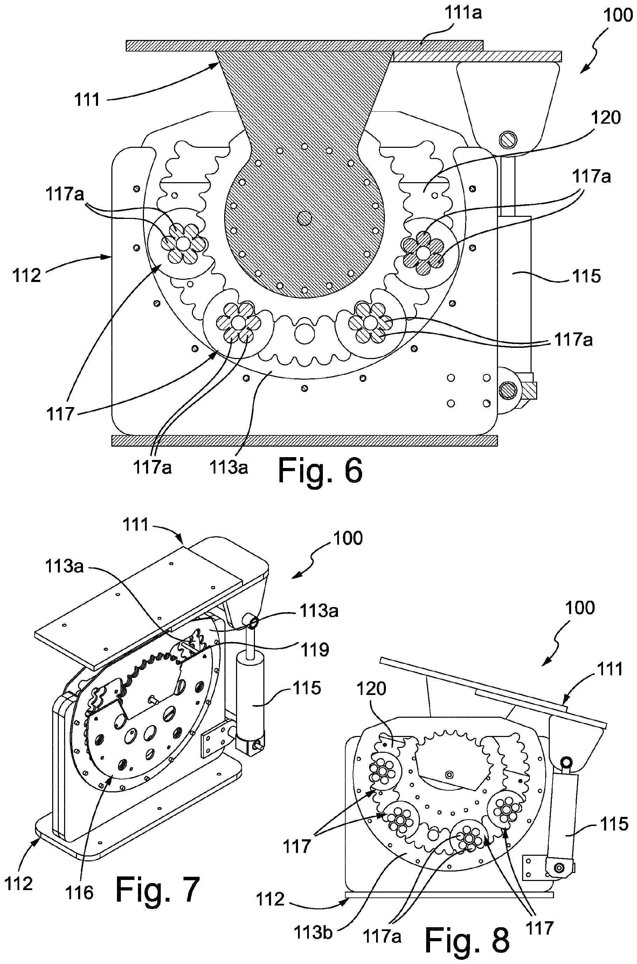

Figures 6, 7 and 8 illustrate a second embodiment of a leveling device according to the present invention which is here indicated with reference 100.

This leveling device 100 is technically analogous to the leveling device 10 and therefore, for the sake of synthesis, the elements corresponding to those described above for the leveling device 10 are indicated with an incremented reference number of 100.

In addition, they refer to the above description except for the differences that are set out below.

The leveling device 100 preferably has a convex seat, a concave member and the rollers 17 replaced by elements configured to mesh in the gears teeth of the convex seat and the concave element.

In a preferred embodiment of the present invention, a platform will be equipped supported by at least a first leveling device 10 and at least one second leveling device 100 which acts as a means for actuating the first leveling device 10.

In this case, the second leveling device 100, that acts as means for actuating the first leveling device 10, comprises a gear mechanism having:
- a solar pinion element which defines the convex element which is integral with the movable part 111,
- a ring element defining the concave seat which is integral with the fixed part 112;
- satellite wheels 117 that simultaneously engage the solar pinion element and the ring element in circumferential positions to the solar pinion, to guide the rotation of the solar pinion with respect to the ring element.

Advantageously, the satellite wheels 117 comprise a plurality of rollers 117a arranged along a circumference and which define inguinal teeth with a tooth of said ring element and with a tooth of said solar pinion.

The satellite wheels 117 advantageously comprise at least one structural wall 123 having:
- a first face from which the first rollers 117a protrude, engaging with the ring element,
- a second face from which protrudes seconds of the rollers 117a that engage with the solar pinion element.

Preferably, the ring element comprises two teeth 113a and 113b and the satellite wheels 117 comprise two structural walls 123, among which are the first rollers 117a which engage the solar pinion.

External to the structural walls 123, the second rollers 117a that engage the first and second teeth 113a and 113b respectively are placed.

The movable part 111 advantageously comprises a plate 111a adapted to support the platform.

At least one hydraulic piston 115 is advantageously connected to the fixed part 112 and to the movable part 111 or to the centering and guiding device 116 which carries the satellite wheels 117.

Each hydraulic piston 115 is connected to the control device to be actuated by the latter in order to compensate for the oscillations of the platform relative to the horizon.

In a preferred installation configuration, a platform will advantageously be supported by a pair of first leveling device 10 each of which will preferably be coupled to a second leveling device 100 acting as a means of actuating the corresponding first leveling device 10.

Advantageously, a leveling device according to the present invention has the fixed part 12, 112 which includes reversible fastening means to temporarily fix the fixed part 12, 112 to a support.

Said fastening means preferably include:
- a mechanical fastening chosen between welding, bolting, fastening through planting elements and/or
- a magnetic fastening through permanent magnets and/or electromagnets.

The second leveling device 100 has a particular quality to allow a reliable and accurate control of the orientation of the movable part 111 with respect to the fixed part 111, thus allowing a precise control of the platform inclination.

Advantageously, a leveling device 10, 100 according to the present invention has the fixed part 12, 112 which includes reversible fastening means for temporarily fixing the fixed part 12, 112 to a support.

Said fastening means preferably include:
- a mechanical fastening chosen between welding, bolting, fastening by means of planting elements, fastening by hydraulically operated movable hooks;
- a magnetic fastening by permanent magnets and/or electromagnets.

The invention thus conceived is susceptible of numerous modifications and variations, all of which fall within the scope of the enclosed claims.

In addition, all details may be replaced by other technically equivalent elements.

In practice, the materials used, as well as the shapes and dimensions of the contingents, may be varied according to the contingent requirements and state of the art.

If the constructive features and techniques mentioned in the following claims are followed by signs or reference numbers, such signs or reference numbers have been assigned with the sole purpose of increasing the intelligibility of the claims themselves and, consequently, they do not constitute in any way limiting the interpretation of each element identified, purely by way of example, from such signs or reference numbers.

## Claims

1. An automatic leveling device (10, 100) for platforms comprising
- a movable part (11, 111) fixable to a platform;
- a fixed part (12, 112) fixable to a base suitable for supporting the platform;
- actuating means adapted to move said movable part (11, 111) with respect to said fixed part (12, 112); said fixed part (12, 112) comprising a concave seat and said movable part (11, 111) comprising a convex element configured to engage said concave seat in a sliding manner; said concave seat and said convex element being configured to couple so as to define an axis of rotation with respect to which said movable part (11, 111) is rotatable with respect to said fixed part (12, 112) thanks to the action of said actuating means, wherein said automatic leveling device (10, 100) also comprises a centering and guiding device (16, 116) interposed between said concave seat and said convex element to facilitate and guide their mutual rotation, **characterized in that** said centering and guiding device (16, 116) comprises a support unit to which rollers (17, 117) are pivoted, said rollers (17, 117) engaging simultaneously said concave seat and said convex element so as to mutually space apart said concave seat and said convex element and so as to roll on them when said movable part (11, 111) is moved relative to said fixed part (12, 112).

2. A leveling device (10, 100) according to claim 1, **characterized in that** said actuating means are connected to said fixed part (12, 112) and to said centering and guiding device (16, 116) for rotating said movable part (11, 111) with respect to said fixed part (12, 112) with respect to said axis of rotation.

3. A leveling device (10) according to claim 1, **characterized in that** said support unit comprises two walls (18, 19) mutually facing each other, between which said rollers (17) are placed, said rollers (17) being pivoted at both said walls (18, 19).

4. A leveling device (10) according to one of the preceding claims , **characterized in that** said concave seat and said convex element each comprise a rail element (20, 21) that is engaged by said rollers (17), said rollers (17) having lateral expansions adapted to face the sides of said rail element (20, 21) to guide said rollers (17) along said rail element (20, 21).

5. A leveling device (10, 100) according to one of the preceding claims, **characterized in that** said concave seat and said convex element have a circular profile.

6. A leveling device (100) according to one of the preceding claims, **characterized in that** said actuating means comprise a gear mechanism having:
- a solar pinion element, which is integral with said movable part (111),
- a ring element, which is integral with said fixed part (112);
- satellite wheels (117) which simultaneously engage said solar pinion element and said ring element in circumferential positions with respect to said solar pinion element, in order to guide the rotation of said solar pinion element with respect to said ring element.

7. A leveling device according to any one of the preceding claims, **characterized in that** said actuating means are connected to said movable part (11, 111) and to said fixed part (12, 112), so as to rotate said movable part (11, 111) with respect to said fixed part (12, 112) in relation to said axis of rotation.

8. A leveling device according to one of the preceding claims, **characterized in that** said fixed part (12, 112) comprises reversible fastening means for temporarily fastening said fixed part (12, 112) to a support; said fastening means comprising by choice:
- a mechanical fastening chosen between welding, bolting, fastening by means of plantable elements and fastening by hydraulically operated movable hooks;
- a magnetic fastening through permanent magnets and/or electromagnets.

## Patentansprüche

1. Automatische Nivellierungsvorrichtung (10, 100) für Plattformen, umfassend
- einen beweglichen Teil (11, 111), welcher an einer Plattform fixierbar ist;
- einen fixen Teil (12, 112), welcher an einer zum Tragen der Plattform geeigneten Basis fixierbar ist;
- Betätigungsmittel, welche adaptiert sind, den beweglichen Teil (11, 111) in Bezug auf den fixen Teil (12, 112) zu bewegen;
wobei der fixe Teil (12, 112) einen konkaven Sitz umfasst und der bewegliche Teil (11, 111) ein konvexes Element umfasst, welches konfiguriert ist, in den konkaven Sitz auf gleitende Art einzugreifen; wobei der konkave Sitz und das konvexe Element konfiguriert sind, zu koppeln, sodass eine Rotationsachse definiert wird, in Bezug auf welche der bewegliche Teil (11, 111) dank der Aktion der Betätigungsmittel drehbar in Bezug auf den fixen Teil (12, 112) ist, wobei die automatische Nivellierungsvorrichtung (10, 100) auch eine Zentrier- und Führungsvorrichtung (16, 116) umfasst, welche zwischen dem konkaven Sitz und dem konvexen Element eingesetzt ist, um deren gegenseitige Drehung zu vereinfachen und zu führen, **dadurch gekennzeichnet, dass** die Zentrier- und Führungsvorrichtung (16, 116) eine Trägereinheit umfasst, auf welcher Rollen (17, 117) drehbar gelagert sind, wobei die Rollen (17, 117) gleichzeitig in den konkaven Sitz und das konvexe Element eingreifen, sodass der konkave Sitz und das konvexe Element gegenseitig beabstandet werden und sodass diese gerollt werden, wenn der bewegliche Teil (11, 111) relativ zu dem fixen Teil (12, 112) bewegt wird.

2. Nivellierungsvorrichtung (10, 100) nach Anspruch 1, **dadurch gekennzeichnet, dass** die Betätigungsmittel mit dem fixen Teil (12, 112) und mit der Zentrier- und Führungsvorrichtung (16, 116) zum Drehen des beweglichen Teils (11, 111) in Bezug auf den fixen Teil (12, 112) in Bezug auf die Rotationsachse verbunden sind.

3. Nivellierungsvorrichtung (10) nach Anspruch 1, **dadurch gekennzeichnet, dass** die Trägereinheit zwei Wände (18, 19) umfasst, welche einander gegenseitig zugewandt sind, zwischen welchen die Rollen (17) platziert sind, wobei die Rollen (17) an den beiden Wänden (18, 19) drehbar gelagert sind.

4. Nivellierungsvorrichtung (10) nach einem der vorstehenden Ansprüche, **dadurch gekennzeichnet, dass** der konkave Sitz und das konvexe Element jeweils ein Schienenelement (20, 21) umfassen, in welches die Rollen (17) eingreifen, wobei die Rollen (17) seitliche Erweiterungen aufweisen, welche adaptiert sind, den Seiten des Schienenelements (20, 21) zugewandt zu sein, um die Rollen (17) entlang des Schienenelements (20, 21) zu führen.

5. Nivellierungsvorrichtung (10, 100) nach einem der vorstehenden Ansprüche, **dadurch gekennzeichnet, dass** der konkave Sitz und das konvexe Element ein kreisförmiges Profil aufweisen.

6. Nivellierungsvorrichtung (100) nach einem der vorstehenden Ansprüche, **dadurch gekennzeichnet, dass** die Betätigungsmittel einen Getriebemechanismus umfassen, welcher aufweist:
- ein Solarritzelelement, welches einteilig mit dem beweglichen Teil (111) ist,
- ein Ringelelement, welches einteilig mit dem fixen Teil (112) ist,
- Satellitenräder (117), welche gleichzeitig in das Solarritzelelement und das Ringelelement in kreisförmigen Positionen in Bezug auf das Solarritzelelement eingreifen, um die Drehung des Solarritzelelements in Bezug auf das Ringelelement zu führen.

7. Nivellierungsvorrichtung nach einem der vorstehenden Ansprüche, **dadurch gekennzeichnet, dass** die Betätigungsmittel mit dem beweglichen Teil (11, 111) und mit dem fixen Teil (12, 112) verbunden sind, um den beweglichen Teil (11, 111) in Bezug auf den fixen Teil (12, 112) in Relation zu der Rotationsachse zu drehen.

8. Nivellierungsvorrichtung nach einem der vorstehenden Ansprüche, **dadurch gekennzeichnet, dass** der fixe Teil (12, 112) reversible Befestigungsmittel zum vorübergehenden Befestigen des fixen Teils (12, 112) an einem Träger umfasst; wobei die Befestigungsmittel nach Auswahl umfassen:
- eine mechanische Befestigung, ausgewählt aus Schweißen, Verschrauben, Befestigung mithilfe von bepflanzbaren Elementen und Befestigung mittels hydraulisch betriebenen beweglichen Haken;
- eine magnetische Befestigung durch Permanentmagnete und/oder Elektromagnete.

## Revendications

1. Dispositif de nivellement automatique (10, 100) pour plateformes comprenant
- une partie mobile (11, 111) fixable à une plateforme ;
- une partie fixe (12, 112) fixable à une base adéquate pour supporter la plateforme ;
- des moyens d'actionnement adaptés pour déplacer ladite partie mobile (11, 111) par rapport à ladite partie fixe (12, 112) ;
ladite partie fixe (12, 112) comprenant une surface d'appui concave et ladite partie mobile (11, 111) comprenant un élément convexe configuré pour mettre en prise ladite surface d'appui concave d'une manière coulissante ; ladite surface d'appui concave et ledit élément convexe étant configurés pour se coupler de façon à définir un axe de rotation par rapport auquel ladite partie mobile (11, 111) peut effectuer une rotation par rapport à ladite partie fixe (12, 112) grâce à l'action desdits moyens d'actionnement, dans lequel ledit dispositif de nivellement automatique (10, 100) comprend également un dispositif de centrage et de guidage (16, 116) interposé entre ladite surface d'appui concave et ledit élément convexe pour faciliter et guider leur rotation réciproque, **caractérisé en ce que** ledit dispositif de centrage et de guidage (16, 116) comprend une unité de support sur laquelle des rouleaux (17, 117) sont amenés à pivoter, lesdits rouleaux (17, 117) mettent en prise simultanément ladite surface d'appui concave et ledit élément convexe de façon à écarter réciproquement ladite surface d'appui concave et ledit élément convexe et de façon à rouler sur eux lorsque ladite partie mobile (11, 111) est déplacée par rapport à ladite partie fixe (12, 112).

2. Dispositif de nivellement (10, 100) selon la revendication 1, **caractérisé en ce que** lesdits moyens d'actionnement sont raccordés à ladite partie fixe (12, 112) et audit dispositif de centrage et de guidage (16, 116) pour mettre en rotation ladite partie mobile (11, 111) par rapport à ladite partie fixe (12, 112) par rapport audit axe de rotation.

3. Dispositif de nivellement (10) selon la revendication 1, **caractérisé en ce que** ladite unité de support comprend deux parois (18, 19) se faisant face réciproquement, entre lesquelles lesdits rouleaux (17) sont placés, lesdits rouleaux (17) étant amenés à pivoter au niveau desdites parois (18, 19).

4. Dispositif de nivellement (10) selon l'une des revendications précédentes, **caractérisé en ce que** ladite surface d'appui concave et ledit élément convexe comprennent chacun un élément formant rail (20, 21) qui est mis en prise par lesdits rouleaux (17), lesdits rouleaux (17) ayant des extensions latérales adaptées pour faire face aux côtés dudit élément formant rail (20, 21) pour guider lesdits rouleaux (17) le long dudit élément formant rail (20, 21).

5. Dispositif de nivellement (10, 100) selon l'une des revendications précédentes, **caractérisé en ce que** ladite surface d'appui concave et ledit élément convexe ont un profil circulaire.

6. Dispositif de nivellement (100) selon l'une des revendications précédentes, **caractérisé en ce que** lesdits moyens d'actionnement comprennent un mécanisme à engrenage ayant :
- un élément formant pignon solaire, qui fait partie intégrante de ladite partie mobile (111),
- un élément annulaire, qui fait partie intégrante de ladite partie fixe (112) ;
- des roues satellites (117) qui mettent en prise simultanément ledit élément formant pignon solaire et ledit élément annulaire dans des positions circonférentielles par rapport audit élément formant pignon solaire, afin de guider la rotation dudit élément formant pignon solaire par rapport audit élément annulaire.

7. Dispositif de nivellement selon l'une quelconque des revendications précédentes, **caractérisé en ce que** lesdits moyens d'actionnement sont raccordés à ladite partie mobile (11, 111) et à ladite partie fixe (12, 112), de façon à mettre en rotation ladite partie mobile (11, 111) par rapport à ladite partie fixe (12, 112) par rapport audit axe de rotation.

8. Dispositif de nivellement selon l'une des revendications précédentes, **caractérisé en ce que** ladite partie fixe (12, 112) comprend des moyens de fixation réversible pour fixer temporairement ladite partie fixe (12, 112) à un support ; lesdits moyens de fixation comprenant au choix :
- une fixation mécanique choisie entre le soudage, le boulonnage, la fixation au moyen d'éléments pouvant être plantés et la fixation par des crochets mobiles à actionnement hydraulique ;
- une fixation magnétique par le biais d'aimants permanents et/ou d'électroaimants.
